# FASCICULE DE BREVET EUROPEEN

(11) **EP 3 390 228 B1**
(45) Date de publication et mention de la délivrance du brevet: **05.02.2020**
(21) Numéro de dépôt: 16819604.6
(22) Date de dépôt: 05.12.2016
(51) Int. Cl.: B64D 15/16, F03D 80/40, F01D 25/02

(54) **DISPOSITIF DE DÉGIVRAGE ET PROCÉDÉ DE CONFIGURATION D'UNE INSTALLATION DE DÉGIVRAGE**
ENTEISENVORRICHTUNG UND AUFBAUVERFAHREN FÜR EINE ENTEISENANLAGE
DE-ICING DEVICE AND CONFIGURATION METHOD FOR A DE-ICING INSTALLATION

(30) Priorité: 17.12.2015 FR 1562637
(43) Date de publication de la demande: 24.10.2018
(73) Titulaire: Commissariat à l'Énergie Atomique et aux Énergies Alternatives, 75015 Paris (FR)
(72) Inventeur: BOLZMACHER, Christian, 92120 Montrouge (FR); LEROY, Edouard, 75013 Paris (FR); DELEHELLE, Adao, 78125 Gazeran (FR)
(74) Mandataire: Bonnet, Michel
(86) Numéro de dépôt international: PCT/FR2016/053205
(87) Numéro de publication internationale: WO 2017/103374

(56) Documents cités:
- FR-A1- 2 998 921
- GB-A- 2 472 053
- US-A1- 2007 262 202

## Description

La présente invention concerne un dispositif de dégivrage, une installation de dégivrage et un procédé de configuration d'une installation de dégivrage.

L'invention s'applique plus particulièrement à un dispositif de dégivrage comportant :
- un actionneur présentant une partie fixe et une partie mobile conçue pour alternativement s'écarter et se rapprocher de la partie fixe,
- un élément intermédiaire comportant :
   - une partie de sollicitation agencée pour être poussée par la partie mobile de l'actionneur lorsque la partie mobile de l'actionneur s'écarte de la partie fixe, et
   - une partie de transmission de mouvement conçue pour se déplacer en fonction du déplacement de la partie de sollicitation et destinée à pousser une pièce à dégivrer pour déformer la pièce à dégivrer.

Par exemple, la demande de brevet anglaise publiée sous le numéro GB 2 472 053 A décrit un dispositif de dégivrage tel que défini ci-dessus.

L'actionneur comporte un empilement piézoélectrique et l'élément intermédiaire est un amplificateur de mouvement comportant un mécanisme de levier fixé, d'une part, à l'actionneur et, d'autre part, à la pièce à dégivrer.

Les inventeurs ont constaté que l'actionneur d'un dispositif de dégivrage tel que décrit dans le document GB 2 472 053 A était rapidement endommagé, au bout d'un faible nombre d'utilisations.

Il peut ainsi être souhaité de prévoir un dispositif de dégivrage qui permette de s'affranchir d'au moins une partie des problèmes et contraintes précités.

Par ailleurs, la demande de brevet français publiée sous le numéro FR 2 998 921 A1 décrit un vérin sollicitant une pièce à dégivrer, le vérin comportant une tige mobile dont l'extrémité est reliée à la paroi externe de la pièce à dégivrer ou vient en appui contre celle-ci.

Il est donc proposé un dispositif de dégivrage selon la revendication 1.

Grâce à l'invention, l'actionneur ne peut pas être tiré par l'élément intermédiaire. Ainsi, si l'actionneur est fragile lorsqu'il est sollicité en traction, comme c'est par exemple le cas des actionneurs piézoélectriques, le risque d'endommagement est diminué.

Des caractéristiques optionnelles du dispositif de dégivrage selon l'invention sont énoncées dans les revendications 2 à 6.

Il est également proposé un procédé de configuration d'une installation de dégivrage comportant une pièce à dégivrer et un dispositif de dégivrage selon l'invention, selon la revendication 7.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation de dégivrage, selon un mode de réalisation de l'invention,
- la figure 2 représente schématiquement la structure générale de l'installation de dégivrage de la figure 1 lors de son fonctionnement,
- la figure 3 illustre les étapes successives d'un procédé de configuration de l'installation de dégivrage de la figure 1, selon un mode de réalisation de l'invention,
- les figures 4 à 10 représentent schématiquement la structure générale d'installations de dégivrage, selon d'autres modes de réalisation de l'invention,
- la figure 11 représente les déformations d'un panneau à dégivrer de l'installation de la figure 1, pour différents modes propres du panneau.

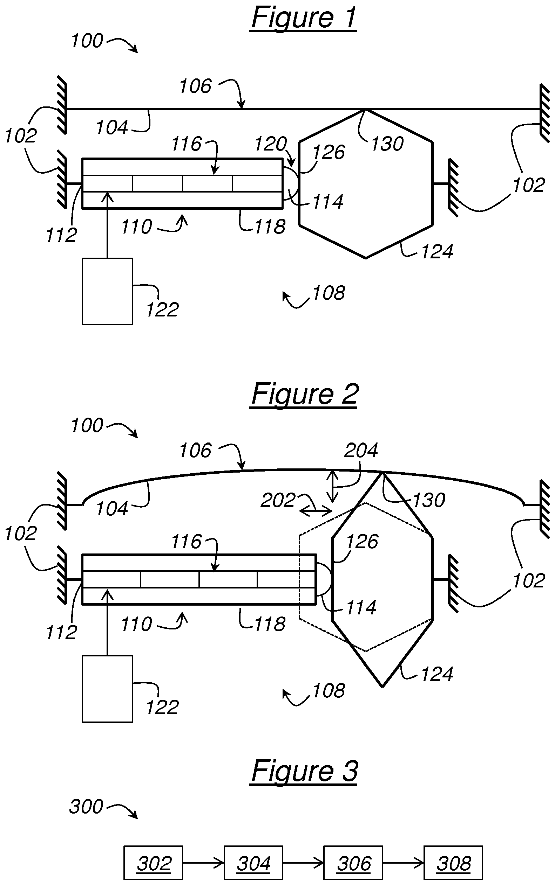

En référence à la figure 1, une installation de dégivrage 100 illustrant un exemple non limitatif de mise en oeuvre de l'invention va à présent être décrite.

L'installation 100 comporte tout d'abord un bâti 102.

L'installation 100 comporte en outre un panneau 104 fixé au bâti 102 par ses bords de manière à réaliser, par exemple, un encastrement du panneau 104. Le panneau 104 présente une face 106 susceptible d'être couverte de givre.

Dans l'exemple décrit, le panneau 104 est plan, mais l'invention peut également s'appliquer à des panneaux bombés ou même à d'autres formes de pièce qu'un panneau. Le panneau 104 fait par exemple partie d'une voilure d'un aéronef ou bien d'une nacelle d'un aéronef (c'est-à-dire une cage renfermant un moteur de l'aéronef, située généralement sous une aile), ou bien encore d'un évaporateur dans un moteur de véhicule automobile. Le panneau 104 est par exemple formé d'une plaque rectangulaire en aluminium de 1 mm d'épaisseur. Le panneau 104 présente par exemple une longueur de 300 mm et une largeur de 200 mm.

L'installation 100 comporte en outre au moins un dispositif de dégivrage 108 du panneau 104.

Le dispositif de dégivrage 108 comporte tout d'abord un actionneur 110 comportant une partie fixe 112 solidaire du bâti 102. L'actionneur 110 comporte en outre une partie mobile 114 conçue pour alternativement s'écarter et se rapprocher de la partie fixe 112.

Dans l'exemple décrit, la partie mobile 114 se déplace linéairement sur une droite passant par la partie fixe 112. En outre, l'actionneur 110 a une forme générale allongée présentant deux extrémités formant respectivement la partie fixe 112 et la partie mobile 114 de l'actionneur 110.

L'actionneur 110 comporte tout d'abord une structure piézoélectrique 116 conçue pour se déformer en réponse à un signal électrique pour déplacer la partie mobile 114 par rapport à la partie fixe 112. La structure piézoélectrique 116 présente, en l'absence de signal électrique, une certaine longueur de repos.

Dans l'exemple décrit, la structure piézoélectrique 116 comporte plusieurs éléments piézoélectriques empilés dans le sens de la longueur de l'actionneur 110.

L'actionneur 110 comporte en outre un dispositif de compression 118 de la structure piézoélectrique 116 de sorte que, en l'absence de sollicitation électrique, la structure piézoélectrique 116 présente une longueur, appelée longueur initiale, inférieure à sa longueur de repos.

L'actionneur 110 comporte en outre une entretoise qui, dans l'exemple décrit, est fixée au dispositif de compression 118 et forme la partie mobile 114 de l'actionneur 116. L'entretoise présente une face arrondie 120. L'entretoise est par exemple réalisée en plastique dur.

Le dispositif de dégivrage 108 comporte en outre un dispositif de commande 122 de l'actionneur 110. Le dispositif de commande 122 est conçu pour alternativement faire s'écarter et se rapprocher la partie mobile 114 de l'actionneur 110 de la partie fixe 112 à une fréquence souhaitée, cette fréquence variant au cours du temps comme cela sera expliquée par la suite.

Dans l'exemple décrit, le dispositif de commande 122 est conçu pour fournir un signal électrique à la structure piézoélectrique 116 pour que sa longueur varie à la fréquence souhaitée, entre deux longueurs plus grandes dont la plus petite est supérieure ou égale à la longueur initiale définie par le dispositif de compression 118. Par exemple, la plus petite de ces deux longueurs est égale à la longueur initiale. La plus grande de ces deux longueurs est de préférence inférieure à la longueur de repos de la structure piézoélectrique 116.

Le dispositif de dégivrage 108 comporte en outre un amplificateur de mouvement 124 intercalé entre l'actionneur 110 et le panneau 104. L'amplificateur de mouvement 124 comporte tout d'abord une partie de sollicitation 126 en contact avec la partie mobile 114 de l'actionneur 110. Ainsi, la partie mobile 114 de l'actionneur 110 est agencée pour pousser la partie de sollicitation 126 de l'amplificateur de mouvement 124 lorsque cette partie mobile 114 s'écarte de la partie fixe 112.

L'amplificateur de mouvement 124 présente en outre une partie de transmission de mouvement 130 en contact avec le panneau 104. L'amplificateur de mouvement 124 est conçu de sorte que la partie de transmission de mouvement 130 reproduise de manière amplifiée le déplacement de la partie de sollicitation 126. Ainsi, la partie de transmission de mouvement 130 est agencée pour pousser le panneau 104, afin de déformer le panneau 104 et ainsi dégivrer sa surface 106.

L'amplificateur de mouvement 124 comporte par exemple un mécanisme de levier pour réaliser l'amplification de mouvement, comportant au moins un bras de levier. Chaque bras de levier présente un point de pivot réalisé soit par une liaison mécanique, soit, comme c'est le cas dans l'exemple de la figure 1, par déformation mécanique d'une pièce de l'amplificateur de mouvement 124.

Dans l'exemple décrit, la partie de transmission de mouvement 130 de l'amplificateur de mouvement 124 est agencée pour pousser le panneau 104 perpendiculairement à ce panneau 104. En outre, la partie de transmission de mouvement 130 est fixée au panneau 104.

Selon l'invention, la partie mobile 114 de l'actionneur 110 et la partie de sollicitation 126 de l'amplificateur de mouvement 124 ne sont pas liées l'une à l'autre, de sorte que la partie de sollicitation 126 de l'amplificateur de mouvement 124 ne puisse pas tirer la partie mobile 114 de l'actionneur 110 pour l'écarter de la partie fixe 112.

Par ailleurs, il sera apprécié que, dans l'exemple décrit, la partie de sollicitation 126 de l'amplificateur de mouvement 124 est en contact avec la face arrondie 120 de l'entretoise, ce qui favorise un contact ponctuel entre les deux pièces. Un contact ponctuel permet de réduire les risques de détérioration de l'actionneur 110 lorsque celui-ci est mal aligné avec l'amplificateur de mouvement 124.

Dans l'exemple de la figure 1, l'amplificateur de mouvement 124 comporte une structure hexagonale présentant six côtés. L'un des six côtés forme la partie de sollicitation 126. Le côté opposé à la partie de sollicitation 126 est fixé au bâti 102. La partie de transmission de mouvement 130 est formée par un sommet relié à la partie de sollicitation 126 par un seul côté de l'hexagone.

En référence à la figure 2, un exemple de fonctionnement de l'installation 100 de la figure 1 va à présent être expliqué.

Lorsque le dispositif de commande 122 fournit un signal électrique à la structure piézoélectrique 116, cette dernière s'allonge par rapport à sa longueur initiale. Cet allongement provoque l'écartement de la partie mobile de l'actionneur 110 d'une distance 202 par rapport à sa partie fixe 112. La partie mobile 114 de l'actionneur 110 pousse la partie de sollicitation 126 de l'amplificateur de mouvement 124, qui se déforme et provoque le déplacement de la partie de transmission de mouvement 130 d'une distance 204 supérieure à la distance 202. Le panneau 106 est ainsi poussé par la partie de transmission de mouvement 130 et se déforme en se soulevant de la distance 204.

Lorsque le signal électrique diminue, voire disparaît, la structure piézoélectrique 116 se rétracte vers sa longueur initiale. Le panneau 104 et l'amplificateur de mouvement 124 sont rappelés, du fait de leur déformation, vers leur état initial.

Ainsi, en faisant varier le signal électrique à une certaine fréquence, il est possible de faire vibrer le panneau 104 à cette fréquence. Si la fréquence de vibration est proche d'une fréquence modale d'un mode propre du panneau 104, il peut arriver que ce dernier se déforme plus que la distance 204 prévue par le fonctionnement de l'actionneur 110. Le panneau 104 entraîne avec lui la partie de transmission de mouvement 130 de l'amplificateur de mouvement 124, de sorte que la partie de sollicitation 126 de l'amplificateur de mouvement 124 se déplace d'une distance supérieure à la distance 202 prévue par le fonctionnement de l'actionneur 110. Dans ce cas, du fait que la partie de sollicitation 126 de l'amplificateur 124 n'est pas liée à la partie mobile 114 de l'actionneur 110, la partie de sollicitation 126 de l'amplificateur 124 se sépare de la partie mobile 114 de l'actionneur 110 sans la tirer. Ainsi, l'actionneur 110 n'est pas soumis à une traction qui risquerait de l'endommager.

En référence à la figure 3, un exemple de procédé de configuration de l'installation de la figure 1 va à présent être décrit.

Au cours d'une étape 302, une analyse modale du panneau 104 alors qu'il est fixé au bâti 102 est réalisée pour déterminer des fréquences modales de modes propres du panneau 104. Cette analyse modale peut être réalisée avec le dispositif de dégivrage 108 mis en place, ou bien sans le dispositif de dégivrage 108. En effet, les inventeurs ont constaté que les fréquences modales ne variaient généralement pas beaucoup entre les deux cas.

Au cours d'une étape 304, au moins l'une des fréquences modales déterminées est sélectionnée. De préférence, les fréquences modales sélectionnées sont celles associées à des modes propres du panneau 104 dans lesquels tous les ventres sont séparés les uns des autres d'une longueur d'onde comprise entre 1 cm et 10 cm. De préférence, au moins l'une des fréquences modales sélectionnées est associée à un mode propre dans lequel tous les ventres sont séparés les uns des autres d'une longueur d'onde comprise entre 1 cm et 5 cm, par exemple entre 1 cm et 3 cm, et au moins une autre des fréquences modales sélectionnées est associée à un mode propre dans lequel tous les ventres sont séparés les uns des autres d'une longueur d'onde comprise entre 5 cm et 10 cm, par exemple entre 8 cm et 10 cm.

Alternativement, les fréquences modales sélectionnées sont celles associés à des modes propres du panneau 104 présentant au moins dix ventres (zones d'amplitude de déformation maximale) séparés les uns des autres par des noeuds (zones d'amplitude de déformation minimale), de préférence au moins 12 ventres.

Au cours d'une étape 306, il est déterminé un intervalle de fréquences comportant la ou les fréquences modales sélectionnées, mais pas les fréquences modales inférieures à la fréquence modale sélectionnée la plus petite ou bien supérieures à la fréquence modale sélectionnée la plus grande. Dans le cas du panneau 104 avec les dimensions indiquées précédemment, l'intervalle de fréquences s'étend : de préférence sur moins de 2 000 Hz, de préférence encore sur moins de 1 000 Hz ; en dessous de 20 000 Hz, de préférence encore en dessous de 4 000 Hz ; et au-dessus de 500 Hz, de préférence encore au-dessus de 1 000 Hz. Ces valeurs sont généralisables pour d'autres géométries de panneau.

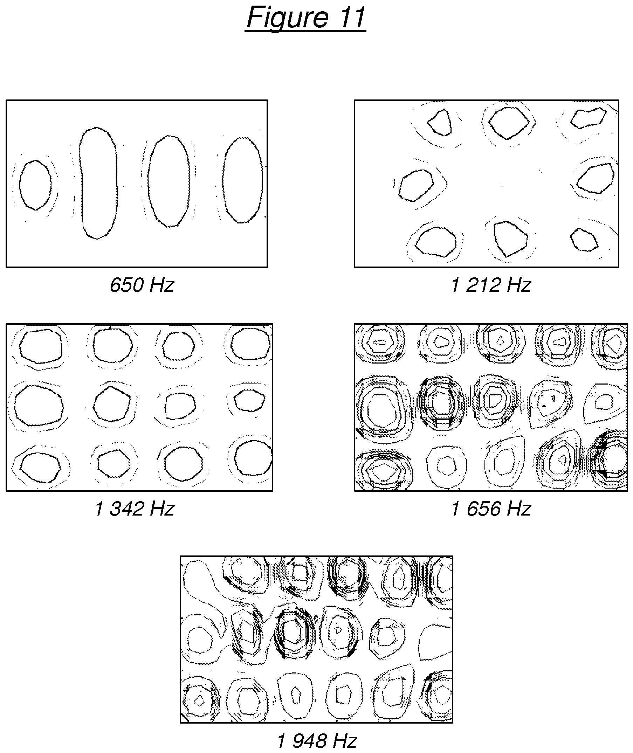

En référence à la figure 11, les déformations du panneau 104 avec les dimensions indiquées précédemment à titre d'exemple, sont illustrées pour cinq fréquences modales : 650 Hz, 1 212 Hz, 1 342 Hz, 1 656 Hz et 1 948 Hz. Il apparaît qu'aux deux premières fréquences modales, les modes propres du panneau 104 ne comportent que respectivement quatre et huit ventres, tandis que les trois autres modes propres du panneau 104 comportent respectivement douze, quinze et dix-huit ventres. Ainsi, l'intervalle de fréquences comporte les fréquences 1 342 Hz, 1 656 Hz et 1 948 Hz, mais pas les fréquences 650 Hz et 1 212 Hz. L'intervalle de fréquences choisi s'étend par exemple de 1 300 Hz à 2 000 Hz.

De retour à la figure 3, au cours d'une étape 308, le dispositif de commande 122 est configuré de manière à pouvoir commander l'actionneur 110 à une fréquence de vibration balayant au cours du temps au moins une fois l'intervalle de fréquences de manière décroissante, c'est-à-dire en commençant par les fréquences les plus élevées. Les inventeurs ont en effet constaté que le dégivrage était plus efficace, lorsque le balayage était réalisé de manière décroissante. Plus précisément, les modes propres présentant des petites longueurs d'onde sont excités en premier. Or, les petites longueurs d'ondes sont celles entraînant les torsions les plus importantes du panneau 104, ce qui permet un pré-décollage important du givre et en particulier le brisement du givre. Les modes propres présentant des longueurs d'onde plus grandes sont ensuite excités. Or, les grandes longueurs d'onde ne produisent pas des torsions aussi importantes que précédemment, mais en revanche une amplitude de mouvement plus élevée qui permet d'achever efficacement le décollage du givre.

La vitesse de balayage est de préférence comprise entre 1 000 Hz/s et 2 000 Hz/s, par exemple autour de 1 500 Hz/s. Ainsi, la densité de puissance par fréquence augmente, ce qui permet d'améliorer l'efficacité du dégivrage. En outre, le temps de balayage est de préférence compris entre 0,1 s et 1,5 s, par exemple autour de 0,5 s.

Par la suite, à chaque fois que le panneau 104 doit être dégivré, le dispositif de commande 122 est activé et commande l'actionneur 110 comme indiqué ci-dessus, de sorte que le dispositif de dégivrage 108 fasse vibrer le panneau 104 à la fréquence de vibration qui balaie au cours du temps l'intervalle de fréquences de manière décroissante, ce qui provoque le dégivrage de la surface 106 du panneau 104.

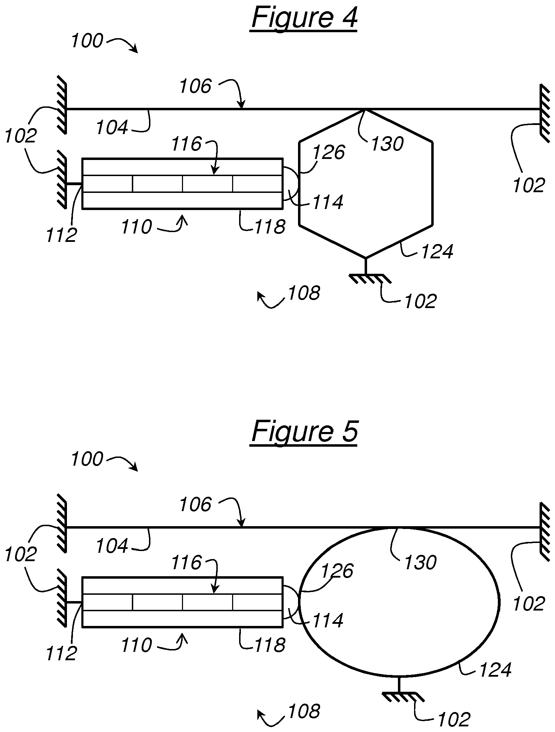

En référence à la figure 4, dans un autre mode de réalisation, l'amplificateur de mouvement 124 est identique à celui de la figure 1, si ce n'est que c'est le sommet opposé à la partie de transmission de mouvement 130 qui est fixée au bâti 102.

En référence à la figure 5, dans un autre mode de réalisation, l'amplificateur de mouvement 124 a la forme d'une ellipse. Une partie de l'ellipse présentant la plus forte concavité forme la partie de sollicitation 126, tandis qu'une partie de l'ellipse présentant la plus faible concavité forme la partie de transmission de mouvement 130. L'autre partie de l'ellipse présentant la plus faible concavité est fixée au bâti 102.

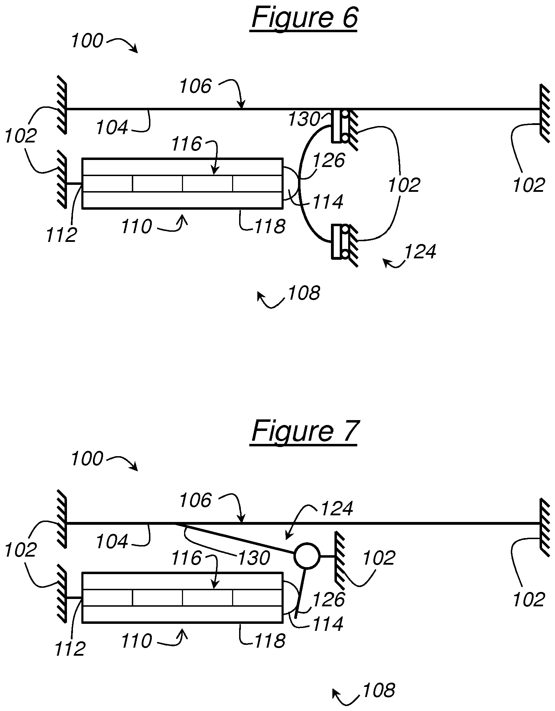

En référence à la figure 6, dans un autre mode de réalisation, l'amplificateur de mouvement 124 comporte une pièce courbée présentant deux extrémités agencées pour glisser par rapport au bâti 102 perpendiculairement à la direction de déplacement de la partie mobile 114 de l'actionneur 110. La partie de sollicitation 126 est formée par le centre de la pièce courbée, tandis que la partie de transmission de mouvement est formée par l'une des deux extrémités de la pièce courbée. Lorsque la partie de mobile 114 de l'actionneur 110 pousse le centre de la pièce courbée, cette dernière s'aplatit et la partie de transmission de mouvement 130 glisse le long du bâti 102 pour pousser le panneau 104. En variante, l'extrémité opposée à la partie de transmission de mouvement 130 pourrait être fixée au bâti 102, plutôt que d'être montée glissante par rapport à ce dernier.

En référence à la figure 7, dans un autre mode de réalisation, l'amplificateur de mouvement 124 comporte un levier de première classe, c'est-à-dire présentant un point de pivot situé entre la partie de sollicitation 126 et la partie de transmission de mouvement 130.

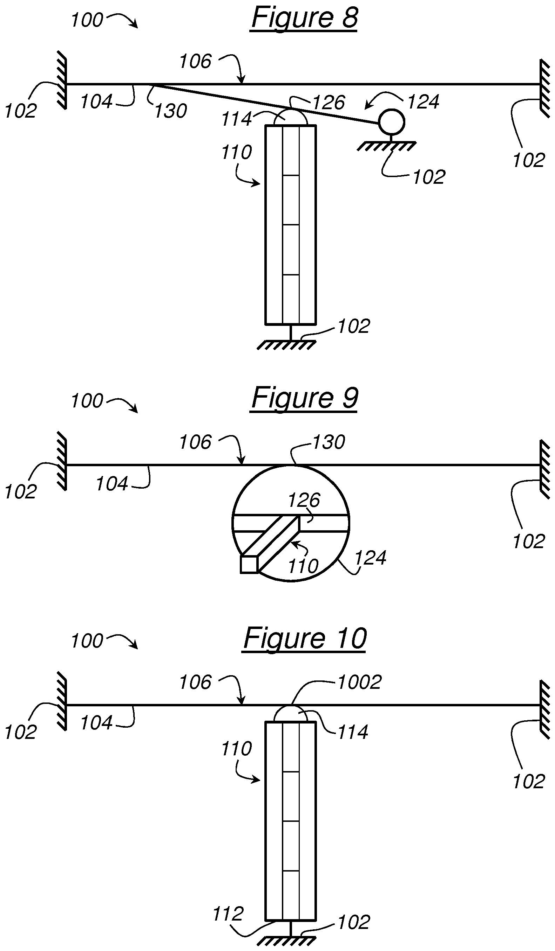

En référence à la figure 8, dans un autre mode de réalisation, l'amplificateur de mouvement 124 comporte un levier de troisième classe, c'est-à-dire présentant un point de pivot situé de sorte que la partie de sollicitation 126 soit située entre ce point de pivot et la partie de transmission de mouvement 130.

En référence à la figure 9, dans un autre mode de réalisation, l'amplificateur de mouvement 124 comporte un cercle et une bande connectant deux parties du cercle. L'un des deux arcs de cercle s'étendant d'une extrémité à l'autre de la bande forme la partie de transmission de mouvement 130 et est fixé au panneau 104. La partie de sollicitation 126 est formée de la bande et, lorsque la partie mobile 114 de l'actionneur 110 pousse la bande, cette dernière se plie de sorte que ses deux extrémités se rapprochent l'une de l'autre, ce qui courbe l'arc de cercle formant la partie de transmission de mouvement 130 qui pousse en retour le panneau 104.

En référence à la figure 10, dans un autre mode de réalisation, le dispositif de dégivrage 108 ne comporte pas d'amplificateur de mouvement. Dans ce cas, la partie mobile 114 de l'actionneur 110 est directement au contact d'une partie de sollicitation 1002 du panneau 104 pour pousser ce dernier. La partie mobile 114 de l'actionneur 110 n'est pas liée à la partie de sollicitation 1002 du panneau 104, de sorte que le panneau 104 ne puisse pas tirer cette partie mobile 114 de l'actionneur, par exemple lorsqu'il est en résonance.

Il apparaît clairement qu'une installation et/ou un dispositif de dégivrage tels que ceux décrits précédemment permet de protéger l'actionneur contre des étirements qui pourraient l'endommager.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, l'actionneur 110, qui est de type piézoélectrique dans les exemples décrits, pourrait être remplacé par d'autres types d'actionneur tels qu'un actionneur magnétostrictif ou bien un actionneur électromagnétique.

## Revendications

1. Dispositif de dégivrage (108) comportant :
- un actionneur (110) présentant une partie fixe (112) et une partie mobile (114) conçue pour alternativement s'écarter et se rapprocher de la partie fixe (112),
- un élément intermédiaire (124) comportant :
• une partie de sollicitation (126) agencée pour être poussée par la partie mobile (114) de l'actionneur (110) lorsque la partie mobile (114) de l'actionneur (110) s'écarte de la partie fixe (112), et
• une partie de transmission de mouvement (130) conçue pour se déplacer en fonction du déplacement de la partie de sollicitation (126) et destinée à pousser une pièce à dégivrer (104) pour déformer la pièce à dégivrer (104),
le dispositif de dégivrage (108) étant **caractérisé en ce que** la partie mobile (114) de l'actionneur (110) et la partie de sollicitation (126) de l'élément intermédiaire (124) ne sont pas liées l'une à l'autre, de sorte que la partie de sollicitation (126) de l'élément intermédiaire (124) ne puisse pas tirer la partie mobile (114) de l'actionneur (110) pour l'écarter de la partie fixe (112).

2. Dispositif de dégivrage (108) selon la revendication 1, dans lequel l'élément intermédiaire (124) est un amplificateur de mouvement (124) conçu de sorte que la partie de transmission de mouvement (130) reproduise, de manière amplifiée, le déplacement de la partie de sollicitation (126).

3. Dispositif de dégivrage (108) selon la revendication 1 ou 2, dans lequel l'actionneur (110) comporte une structure piézoélectrique (116) conçue pour se déformer en réponse à un signal électrique pour déplacer la partie mobile (114) de l'actionneur (110) par rapport à la partie fixe (112).

4. Dispositif de dégivrage selon l'une quelconque des revendications 1 à 3, dans lequel la partie mobile (114) de l'actionneur (110) comporte une face arrondie (120) destinée à pousser la partie de sollicitation (126) de l'élément intermédiaire (124).

5. Dispositif de dégivrage (108) selon l'une quelconque des revendications 1 à 4, comportant en outre un dispositif de commande (122) de l'actionneur (110) conçu pour alternativement faire s'écarter et se rapprocher la partie mobile (114) de l'actionneur (110) de la partie fixe (112) à une fréquence balayant au cours du temps au moins une fois un intervalle de fréquences prédéterminé.

6. Dispositif de dégivrage selon la revendication 5, dans lequel l'intervalle de fréquences est balayé de manière décroissante.

7. Procédé de configuration (300) d'une installation de dégivrage (100) comportant une pièce à dégivrer (104) et un dispositif de dégivrage (108) de la pièce à dégivrer (104) selon l'une quelconque des revendications 5 ou 6, **caractérisé en ce que** le procédé comporte les étapes suivantes :
- la détermination (302) de fréquences modales de modes propres de la pièce à dégivrer (104),
- la sélection (304) d'au moins l'une des fréquences modales,
- la détermination (306) d'un intervalle de fréquences comportant la ou les fréquences modales sélectionnées, mais pas les fréquences modales inférieures à la fréquence modale sélectionnée la plus petite ou bien supérieures à la fréquence modale sélectionnée la plus grande,
- la configuration (308) du dispositif de commande (122) de manière à pouvoir commander l'actionneur (110) pour alternativement faire s'écarter et se rapprocher la partie mobile (114) de l'actionneur (110) de la partie fixe (112) à une fréquence balayant au cours du temps au moins une fois l'intervalle de fréquences.

## Patentansprüche

1. Enteisungsvorrichtung (108), umfassend:
- einen Aktor (110), der einen feststehenden Teil (112) und einen beweglichen Teil (114) aufweist, welcher dafür konzipiert ist, sich abwechselnd vom feststehenden Teil (112) zu beabstanden und sich demselben anzunähern,
- ein Zwischenelement (124), umfassend:
-- einen Beaufschlagungsteil (126), der dafür eingerichtet ist, vom beweglichen Teil (114) des Aktors (110) gedrückt zu werden, wenn sich der bewegliche Teil (114) des Aktors (110) vom feststehenden Teil (112) beabstandet, und
-- einen Bewegungsübertragungsteil (130), der dafür konzipiert ist, sich in Abhängigkeit von der Verlagerung des Beaufschlagungsteils (126) zu verlagern, und der dazu bestimmt ist, ein zu enteisendes Bauteil (104) zu drücken, um das zu enteisende Bauteil (104) zu verformen,
wobei die Enteisungsvorrichtung (108) **dadurch gekennzeichnet ist, dass** der bewegliche Teil (114) des Aktors (110) und der Beaufschlagungsteil (126) des Zwischenelements (124) nicht miteinander verbunden sind, derart, dass der Beaufschlagungsteil (126) des Zwischenelements (124) den beweglichen Teil (114) des Aktors (110) nicht ziehen kann, um denselben vom feststehenden Teil (112) zu beabstanden.

2. Enteisungsvorrichtung (108) nach Anspruch 1, wobei das Zwischenelement (124) ein Bewegungsverstärker (124) ist, der derart konzipiert ist, dass der Bewegungsübertragungsteil (130) die Verlagerung des Beaufschlagungsteils (126) verstärkt reproduziert.

3. Enteisungsvorrichtung (108) nach Anspruch 1 oder 2, wobei der Aktor (110) eine piezoelektrische Struktur (116) umfasst, die dafür konzipiert ist, sich in Reaktion auf ein elektrisches Signal zu verformen, um den beweglichen Teil (114) des Aktors (110) in Bezug auf den feststehenden Teil (112) zu verlagern.

4. Enteisungsvorrichtung nach einem der Ansprüche 1 bis 3, wobei der bewegliche Teil (114) des Aktors (110) eine gerundete Seite (120) umfasst, die dazu bestimmt ist, den Beaufschlagungsteil (126) des Zwischenelements (124) zu drücken.

5. Enteisungsvorrichtung (108) nach einem der Ansprüche 1 bis 4, die weiter eine Steuerungsvorrichtung (122) des Aktors (110) umfasst, die dafür konzipiert ist, den beweglichen Teil (114) des Aktors (110) mit einer Frequenz, die im Laufe der Zeit mindestens einmal ein vorbestimmtes Frequenzintervall durchläuft, sich abwechselnd vom feststehenden Teil (112) beabstanden und sich demselben annähern zu lassen.

6. Enteisungsvorrichtung nach Anspruch 5, wobei das Frequenzintervall absteigend durchlaufen wird.

7. Verfahren zur Konfiguration (300) einer Enteisungsanlage (100), die ein zu enteisendes Bauteil (104) und eine Vorrichtung zum Enteisen (108) des zu enteisenden Bauteils (104) nach einem der Ansprüche 5 oder 6 umfasst, **dadurch gekennzeichnet, dass** das Verfahren die folgenden Schritte umfasst:
- das Bestimmen (302) von modalen Frequenzen von Moden, die dem zu enteisenden Bauteil (104) eigen sind,
- das Auswählen (304) mindestens einer der modalen Frequenzen,
- das Bestimmen (306) eines Frequenzintervalls, das die ausgewählte(n) modale(n) Frequenz(en), nicht aber die modalen Frequenzen unterhalb der kleinsten ausgewählten modalen Frequenz, oder oberhalb der größten ausgewählten modalen Frequenz umfasst,
- das Konfigurieren (308) der Steuerungsvorrichtung (122) so, dass der Aktor (110) gesteuert werden kann, um den beweglichen Teil (114) des Aktors (110) mit einer Frequenz, die im Laufe der Zeit mindestens einmal das Frequenzintervall durchläuft, sich vom feststehenden Teil (112) beabstanden und sich demselben annähern zu lassen.

## Claims

1. A defrosting device (108), comprising:
- an actuator (110) having a stationary portion (112) and a movable portion (114) designed to alternately move away from and move towards the stationary portion (112),
- an intermediate element (124) comprising:
• a loading portion (126) arranged to be pushed by the movable portion (114) of the actuator (110) when the movable portion (114) of the actuator (110) moves away from the stationary portion (112), and
• a movement transmission portion (130) designed to move according to the movement of the loading portion (126) and intended to push a part to be defrosted (104) to deform the part to be defrosted (104),
the defrosting device (108) being **characterized in that** the movable portion (114) of the actuator (110) and the loading portion (126) of the intermediate element (124) are not connected to one another, such that the loading portion (126) of the intermediate element (124) cannot pull the movable portion (114) of the actuator (110) so as to move same away from the stationary portion (112).

2. The defrosting device (108) according to claim 1, wherein the intermediate element (124) is a movement amplifier (124) designed so that the movement transmission portion (130) reproduces, in an amplified manner, the movement of the loading portion (126).

3. The defrosting device (108) according to claim 1 or 2, wherein the actuator (110) comprises a piezoelectric structure (116) designed so as to deform in response to an electrical signal in order to move the movable portion (114) of the actuator (110) with respect to the stationary portion (112).

4. The defrosting device according to any of claims 1 to 3, wherein the movable portion (114) of the actuator (110) comprises a rounded face (120) intended to push the loading portion (126) of the intermediate element (124).

5. The defrosting device (108) according to any of claims 1 to 4, further comprising a device (122) controlling the actuator (110) designed so as to alternately make the movable portion (114) of the actuator (110) move away from and towards the stationary portion (112) at a frequency sweeping a predetermined range of frequencies at least once in the course of time.

6. The defrosting device according to claim 5, wherein the range of frequencies is swept in a decreasing manner.

7. A method for configuring (300) a defrosting installation (100) comprising a part to be defrosted (104) and a device (108) for defrosting the part to be defrosted (104) according to any of claims 5 or 6, **characterized in that** the method comprises the following steps:
- determining (302) modal frequencies of eigenmodes of the part to be defrosted (104),
- selecting (304) at least one of the modal frequencies,
- determining (306) a range of frequencies comprising the modal frequency or frequencies selected, but not the modal frequencies lower than the smallest selected modal frequency or greater than the highest selected modal frequency,
- configuring (308) the control device (122) so as to be able to control the actuator (110) so as to alternately move the movable portion (114) of the actuator (110) away from and towards the stationary portion (112) at a frequency sweeping the range of frequencies at least once in the course of time.
